# EUROPEAN PATENT SPECIFICATION

(11) **EP 0 420 160 B1**
(45) Date of publication and mention of the grant of the patent: **01.02.1995**
(21) Application number: 90118412.7
(22) Date of filing: 25.09.1990
(51) Int. Cl.: C08L 23/10, C08L 23/16

(54) **Polyolefin compositions of high impact strength**
Hochschlagfeste Polyolefinzusammensetzungen
Compositions de polyoléfine à haute résistance au choc

(30) Priority: 26.09.1989 IT 2183189
(43) Date of publication of application: 03.04.1991
(73) Proprietor: SPHERILENE S.r.l., I-20121 Milano (IT)
(72) Inventor: Milani, Federico, Dr., I-45030 S.M. Maddalena, Rovigo (IT); Massari, Paola, I-44100 Ferrara (IT); Lori, Domenico, I-44100 Ferrara (IT)
(74) Representative: Barz, Peter, Dr.

(56) References cited:
- EP-A- 0 324 250
- WORLD PATENTS INDEX LATEST Derwent Publications Ltd., London, GB; AN 86-090839& JP-A-61 036 346
- PATENT ABSTRACTS OF JAPAN vol. 11, no. 394 (C-465)(2841) 23 December 1987& JP-A-62 015 334

## Description

The present invention relates to polyolefinic compositions characterized by a high impact strength as well as by a high melt flow and a good moldability.

From JP-A-57-159841 there are known polyolefinic compositions endowed with improved impact strength characteristics which consist of blends of a crystalline ethylene-propylene block copolymer, an amorphous random ethylene-propylene copolymer and talc.

Said compositions show the drawback of having too high a viscosity and therefore an unsatisfactory moldability.

Furthermore, from JP-A-62-153334 there are known polyolefinic compositions endowed with a high melt flow which consist of blends comprising, in suitable proportions, two crystalline ethylene-propylene block copolymers having a melt index of 45-65 and 10-35, respectively and containing from 4 to 10% by weight of copolymerized ethylene and two amorphous random ethylene-propylene copolymers containing 20-30% of propylene and exhibiting a Mooney viscosity ML 1+4 (100°C) of 20-25 and 40-80, respectively.

The impact strength of said compositions, however, is excessively low at low temperatures.

There have now been found polyolefinic compositions which are endowed at the same time with a high melt flow and a high impact strength at low temperatures.

Said compositions comprise:
a) from 35 to 45% by weight of a propylene-ethylene copolymer containing from 4 to 10% by weight of copolymerized ethylene and exhibiting a melt flow rate (M.F.R.) ranging from 10 to 20 g/10 minutes at 230°C and 2.16 kg;
b) from 35 to 45% by weight of a propylene-ethylene copolymer containing from 4 to 10% by weight of ethylene and exhibiting a melt flow rate (M.F.R.) ranging from 35 to 45 g/10 minutes at 230°C and 2.16 kg;
c) from 10 to 30% by weight of an elastomeric copolymer or terpolymer composed of units deriving from ethylene, propylene and, optionally, a conjugated or non-conjugated diene, containing from 40 to 55%, preferably from 40 to 50% by weight, of propylene and from 0 to 5% by weight of one or more dienes, which co- or terpolymer is amorphous according to X-ray diffraction, and is furthermore characterized by:
   - values of the sum (α₂ + α₄) of higher than 16% (according to N.M.R. analysis);
   - a Mooney viscosity ML (1+4) at 100°C of from 30 to 38;
   - a molecular weight distribution (M.W.D.) of less than 3;
   - values of the product (R₁ x R₂) of less than 0.5; and
   - an intrinsic viscosity (in tetraline at 135°C) of from 1.5 to 2 dl/g.

All the copolymers specified under items a), b) and c) are known; the methods of preparing them are broadly described in the literature.

In particular, the parameters α₂ and α₄ represent, as is known, the fraction of methylene sequences having, respectively, two and four uninterrupted methylene groups between two consecutive methyl and methylene groups in the polymeric chain, with respect to the total of uninterrupted methylene sequences, as determined by ¹³C-N.M.R. analysis. The value of said fraction is determined by means of the method described by J.C. Randall in "Macromolecules" 11, 33 (1978).

The parameters R₁ and R₂ represent the reactivity ratio values of the monomers - ethylene and propylene -, on which the distribution of the corresponding monomeric units in the copolymer depends. when the product (R₁ x R₂) equals 1, the distribution of the monomeric units is completely statistical.

When the product (R₁ x R₂) is higher than 1, the formation of relatively long portions of the chain which contain only one kind of monomeric unit is, conversely, favoured. For values lower than 1, the alternation of the two monomers is favoured and, at the same composition, the sequences containing only one kind of monomeric unit become shorter and shorter.

Details in this connection and the method for determining the values of the product (R₁ x R₂) are given by G. Natta et al. in "La Chimica e l'Industria" vol. 42 - No. 2, February 1960, pages 125-132, as well as by C. Tosi et al. in "European Polymer Journal" 1968, vol. 4, pages 107-114.

The molecular weight distribution (M.W.D.) is defined herein as the ratio of weight average molecular weight to number average molecular weight (M_{w}/Mₙ) and provides an indication as to the polydispersion of the molecular weights.

As diene monomers which can be used for preparing the elastomeric copolymers and terpolymers specified under the above item c), the following ones may be mentioned as exemplary: ethylidene norbornene, indene, 1,4-hexadiene, 1,3-butadiene, cyclopentadiene, norbornadiene.

Preferred concentrations of the elastomeric component (c) in the compositions of the present invention are in the range of from 15 to 30% by weight, and even more preferred from 15 to 25% by weight.

Inorganic and/or organic (also polymeric) fillers, besides dyes, stabilizers and other conventional additives, can be present in the compositions according to the invention in amounts of preferably up to about 10% by weight, based on the total weight of the composition.

The compositions of the present invention are preparable by mixing the three components in a Banbury type mixer at a polymeric material melt temperature which generally ranges from about 180 to about 190°C.

The blend may then be extruded and granulated. The granulated product is utilizable to produce articles by injection molding.

The following examples are given to illustrate the present invention, but they should not be construed as limitation thereof.

### Examples 1 to 9

By operating at a temperature of from 180 to 190°C in a Banbury mixer (volume 13 l) nine blends were prepared which were then extruded in an operating single-screw extruder.

The resulting extrudate was utilized to produce, by injection molding, test pieces having dimensions in accordance with ASTM standards, on which the following properties were determined:
a) M.F.R. value (ASTM D.1238)
b) elastic flexural modulus (ASTM D.790)
c) Izod resilience (ASTM D.256)
d) heat distortion temperature (HDT) (ASTM D.648)
e) VICAT softening point (ASTM D.1505)
f) tensile strength (ASTM D.638)
g) elongation at break (ASTM D.638).

The blends so prepared had the following weight composition:

### Blend (1)

A. 45% of copolymer of propylene and 5% by weight of ethylene, having a M.F.R. of 13;
B. 45% of a copolymer of propylene and 5% by weight of ethylene, having a M.F.R. of 40;
C. 10% of an amorphous elastomeric ethylene-propylene copolymer containing 45% by weight of propylene and having an intrinsic viscosity /η/ of 1.6, a Mooney viscosity of 34, a value of (α₂ + α₄) of 18%, a value of (R₁ x R₂) of 0.3, and a M.W.D. of 2.8.

### Blend (2)

A. 40% of copolymer A of blend (1)
B. 40% of copolymer B of blend (1)
C. 20% of copolymer C of blend (1)

### Blend (3)

A. 35% of copolymer A of blend (1)
B. 35% of copolymer B of blend (1)
C. 30% of copolymer C of blend (1)

### Blend (4)

A. 42.5% of copolymer A of blend (1)
B. 42.5% of copolymer B of blend (1)
C. 15% of copolymer C of blend (1)

### Blend (5)

A. 37.5% of copolymer A of blend (1)
B. 37.5% of copolymer B of blend (1)
C. 25% of copolymer C of blend (1)

### Blend (6) (comparative)

A. 45% of copolymer A of blend (1)
B. 45% of copolymer B of blend (1)
C. 10% of an amorphous elastomeric ethylene-propylene copolymer containing 43% by weight of propylene and having a Mooney viscosity at 100°C of higher than 50, a value of /η/ of 2, and values of (α₂ + α₄) of 15%, of (R₁ x R₂) of 0.4 and of M.W.D. of 2.9.

### Blend (7) (comparative)

A. 40% of copolymer A of blend (1)
B. 40% of copolymer B of blend (1)
C. 20% of copolymer C of blend (6)

### Blend (8) (comparative)

A. 35% of copolymer A of blend (1)
B. 35% of copolymer B of blend (1)
C. 30% of copolymer C of blend (6)

### Blend (9) (comparative)

A. 40% of copolymer A of blend (1)
B. 40% of copolymer B of blend (1)
C. 20% of an amorphous elastomeric ethylene-propylene copolymer containing 44% by weight of propylene and having a Mooney viscosity at 100°C of 35, a value of /η/ of 2.0, and values of (α₂ + α₄) of 0.2%, of (R₁ x R₂) of 1, and of M.W.D. of 6.

The characteristics of the above compositions are indicated in the following Table.

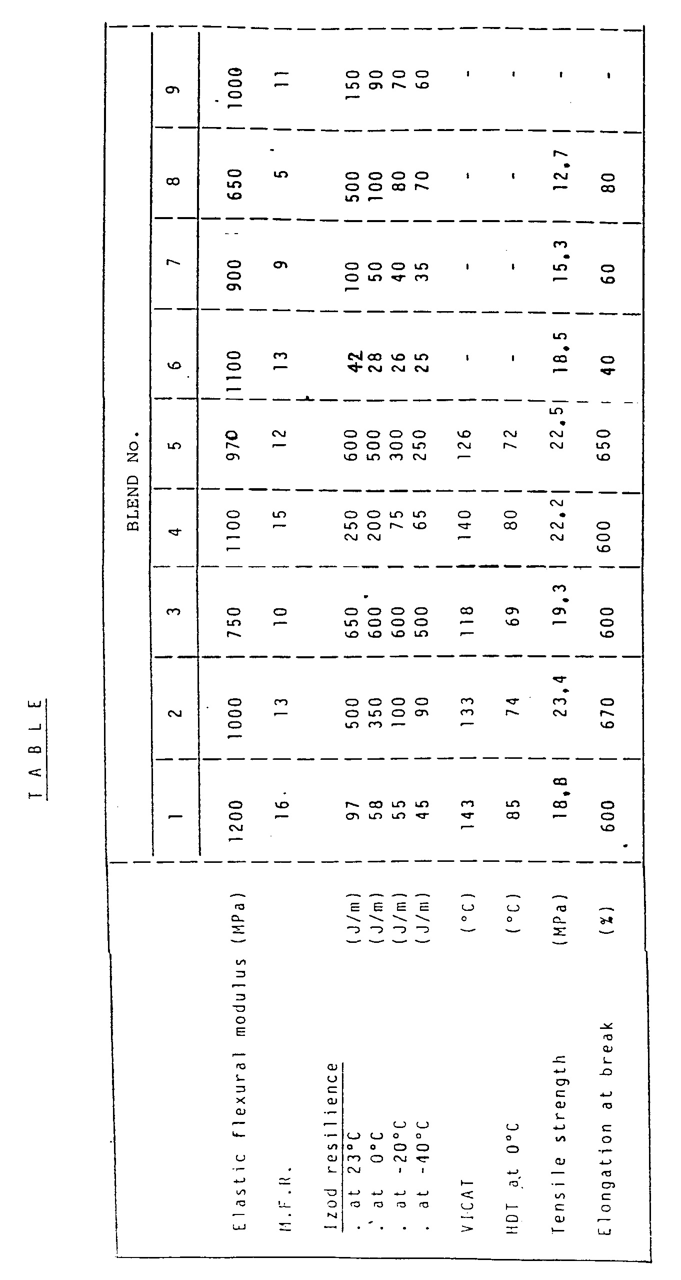

## Claims

1. Polyolefin compositions comprising
a) from 35 to 45% by weight of a propylene-ethylene copolymer containing from 4 to 10% by weight of ethylene and exhibiting a melt flow rate of from 10 to 20 g/10 minutes at 230°C and 2.16 kg;
b) from 35 to 45% by weight of a propylene-ethylene copolymer containing from 4 to 10% by weight of ethylene and exhibiting a melt flow rate of from 35 to 45 g/10 minutes at 230°C and 2.16 kg;
c) from 10 to 30% by weight of an elastomeric copolymer or terpolymer composed of units deriving from ethylene, propylene and, optionally, a conjugated or non-conjugated diene and containing from 40 to 55% by weight of propylene and from 0 to 5% by weight of diene, which co- or terpolymer is amorphous according to X-ray diffraction, and is furthermore characterized by:
- values of the sum (α₂ + α₄) of higher than 16%, α₂ and α₄ representing the fraction of methylene sequences having, respectively, 2 and 4 uninterrupted methylene groups between 2 consecutive methyl and methylene groups in the polymeric chain, with respect to the total of uninterrupted methylene sequences, as determined by ¹³C-MMR analysis;
- a Mooney viscosity ML (1+4) at 100°C of from 30 to 38;
- a molecular weight distribution of less than 3;
- values of the product (R₁ x R₂) of less than 0.5, R₁ and R₂ representing the reactivity ratio values of the monomers: ethylene and propylene; and
- an intrinsic viscosity (in tetraline at 135°C) of from 1.5 to 2 dl/g.

2. Compositions according to claim 1, wherein the elastomeric copolymer (c) contains from 40 to 50% by weight of propylene.

3. Compositions according to any one of claims 1 and 2, which comprise from 15 to 30% by weight of the elastomeric copolymer (c).

4. Compositions according to any one of claims 1 to 3 which comprise from 15 to 25% by weight of the elastomeric copolymer (c).

## Patentansprüche

1. Polyolefin-Zusammensetzung, umfassend
(a) 35 bis 45 Gewichts-% eines Propylen-Ethylen-Copolymeren, das 4 bis 10 Gewichts-% Ethylen enthält und ein Schmelzflußverhältnis bei 230°C und 2,16 kg von 10 bis 20 g/10 Minuten aufweist;
(b) 35 bis 45 Gewichts-% eines Propylen-Ethylen-Copolymeren, das 4 bis 10 Gewichts-% Ethylen enthält und ein Schmelzflußverhältnis bei 230°C und 2,16 kg von 35 bis 45 g/10 Minuten aufweist;
(c) 10 bis 30 Gewichts-% eines elastomeren Copolymeren oder Terpolymeren, das aus Einheiten zusammengesetzt ist, die von Ethylen, Propylen und gegebenenfalls einem konjugierten oder nicht-konjugierten Dien abgeleitet sind, und 40 bis 55 Gewichts-% Propylen und 0 bis 5 Gewichts-% Dien enthält, wobei diese Co- oder Terpolymer gemäß der Röntgenbeugung amorph ist und weiterhin gekennzeichnet ist durch:
- Werte der Summe (α₂ + α₄) von höher als 16%, wobei α₂ und α₄ die Fraktion von Methylensequenzen darstellen, die 2 bzw. 4 nicht unterbrochene Methylengruppen zwischen 2 aufeinanderfolgenden Methyl- und Methylengruppen in der Polymerkette bezogen auf alle nicht unterbrochenen Methylensequenzen, wie durch ¹³C-NMR-Analyse bestimmt, aufweisen;
- eine Mooney-Viskosität ML (1 + 4) bei 100°C von 30 bis 38;
- eine Molekulargewichtsverteilung von weniger als 3;
- Werte des Produktes (R₁ x R₂) von weniger als 0,5, wobei R₁ und R₂ die Reaktivitätsverhältnis-Werte der Monomeren: Ethylen und Propylen darstellen; und
- eine Grenzviskosität (in Tetralin bei 135°C) von 1,5 bis 2 dl/g.

2. Zusammensetzungen nach Anspruch 1, in denen das elastomere Copolymer (c) 40 bis 50 Gewichts-% Propylen enthält.

3. Zusammensetzungen nach irgendeinem der Ansprüche 1 und 2, welche 15 bis 30 Gewichts-% des elastomeren Copolymeren (c) umfassen.

4. Zusammensetzungen nach irgendeinem der Ansprüche 1 bis 3, welche 15 bis 25 Gewichts-% des elastomeren Copolymeren (c) umfassen.

## Revendications

1. Compositions de polyoléfines comprenant :
(a) de 35 à 45% en poids d'un copolymère propylèneéthylène contenant de 4 à 10% en poids d'éthylène et présentant un indice de fluidité (IF) compris dans la gamme de 10 à 20 g/10 minutes à 230°C et 2,16 kg;
(b) de 35 à 45% en poids d'un copolymère propylèneéthylène contenant de 4 à 10% en poids d'éthylène et présentant un indice de fluidité compris dans la gamme de 35 à 45 g/10 minutes à 230°C et 2,16 kg;
(c) de 10 à 30% en poids d'un copolymère ou d'un terpolymère élastomère composé d'unités dérivées d'éthylène, de propylène et éventuellement d'un diène conjugué ou non conjugué, et contenant de 40 à 55% en poids de propylène et de 0 à 5% en poids de diène, lequel co- ou terpolymère est amorphe d'après une analyse par diffraction des rayons X et est de plus caractérisé par:
- des valeurs de la somme (α₂ + α₄) de plus de 16%, α₂ et α₄ représentant la fraction des séquences méthylène ayant, respectivement, 2 et 4 groupes méthylène sans interruption entre deux groupes méthyle et méthylène consécutifs dans la chaîne polymère, relativement au total des séquences méthylène sans interruption, comme cela est déterminé par analyse par RMN de ¹³C;
- une viscosité Mooney ML₁₊₄ à 100°C de 30 à 38;
- une distribution des poids moléculaires de moins de 3;
- des valeurs du produit (R₁ x R₂) de moins de 0,5, R₁ et R₂ représentant les valeurs du rapport de réactivité des monomères, l'éthylène et le propylène: et
- une viscosité intrinsèque (dans la tétraline à 135°C) comprise entre 1,5 et 2 dl/g.

2. Compositions suivant la revendication 1, dans lesquelles le copolymère élastomère (c) contient de 40 à 50% en poids de propylène.

3. Compositions suivant l'une quelconque des revendications 1 et 2, qui comprennent de 15 à 30% en poids du copolymère élastomère (c).

4. Compositions suivant l'une quelconque des revendications 1 et 2, qui comprennent de 15 à 25% en poids du copolymère élastomère (c).
